# EUROPÄISCHE PATENTSCHRIFT

(11) **EP 0 413 117 B1**
(45) Veröffentlichungstag und Bekanntmachung des Hinweises auf die Patenterteilung: **29.12.1993**
(21) Anmeldenummer: 90112443.8
(22) Anmeldetag: 29.06.1990
(51) Int. Cl.: B26B 21/06

(54) **Rasierapparatkopf, insbesondere Rasierklingeneinheit eines Nassrasierapparates**
Razor head, especially a blade unit for a wet-shaver
Tête de rasage, en particulier unité de lames pour rasoir mécanique

(30) Priorität: 16.08.1989 DE 8909759 U
(43) Veröffentlichungstag der Anmeldung: 20.02.1991
(73) Patentinhaber: Wilkinson Sword Gesellschaft mit beschränkter Haftung, D-42659 Solingen (DE)
(72) Erfinder: Althaus, Wolfgang, D-5600 Wuppertal-Cronenberg (DE); Schwarz. Michael, D-4690 Herne (DE)
(74) Vertreter: Stenger, Watzke & Ring Patentanwälte

(56) Entgegenhaltungen:
- CH-A- 647 450
- DE-A- 2 750 796
- DE-A- 3 315 635
- GB-A- 2 009 017
- GB-A- 2 055 069

## Beschreibung

Die Erfindung betrifft einen am vorderen Ende eines Handgriffs angeordneten Rasierapparatekopf, insbesondere Rasierklingeneinheit eines Naßrasierapparates, bei dem in einem, an einer Vorderkante eine Führungsleiste aufweisenden Kunststoffgehäuse eine Einfach- oder Doppelrasierklinge angeordnet ist, wobei das Kunststoffgehäuse von der Vorderkante gesehen sowohl unterseitig als auch rückseitig Druchbrechungen aufweist, welche jeweils mit dem offenen Bereich des Kunststoffgehäuses bei der (den) Schneidkante(n) der Rasierklinge(n) in Verbindung stehen.

Bei Einwegnaßrasierapparaten ist eine Einfach- oder Doppelrasierklinge unlösbar im Rasierapparatekopf in einem Kunststoffgehäuse eingebettet. Ist der Rasierapparatekopf separat ausgebildet und kann an einem Handgriff befestigt werden, wobei zu diesem Zweck der Handgriff sowie der Rasierapparatekopf miteinander korrespondierende Verriegelungseinrichtungen ausweisen, spricht man von einer sogenannten Rasierklingeneinheit.

Die bekannten Rasierapparateköpfe, insbesondere die Rasierklingeneinheiten weisen in ihrem Kunststoffgehäuse in der Regel Durchbrechungen auf. Diese dienen der besseren Durchströmung des Rasierschaumes zur Vermeidung einer Staubildung innerhalb des Kunststoffgehäuses. Vor allem aber dienen diese Durchbrechungen der Reinigung des Rasierapparatekopfes nach erfolgter Rasur. Allerdings hat sich bei den bekannten Rasierapparateköpfen, insbesondere bei den bekannten Rasierklingeneinheiten herausgestellt, daß die dort ausgebildeten Durchbrechungen die an sie gestellten Forderungen nicht in vollster Zufriedenheit erfüllen. Insbesondere sind sie derart ungünstig angeordnet, daß kein optimales Durchströmen des Rasierschaumes während der Rasur möglich ist. Darüber hinaus läßt sich keine optimale Reinigung erzielen, da trotz der Durchbrechungen im Kunststoffgehäuse Seifenreste haften bleiben, da diese nicht durch die Durchbrechungen herausgespült werden.

Ein gattungsgemäßer Rasierapparatekopf eines Naßrasierapparates, der am vorderen Ende eines Handgriffs angeordnet ist, ist in der CH-A5-647 450 offenbart. Der Rasierapparatekopf weist dabei ein V-förmiges Kunststoffgehäuse auf, dessen Öffnungswinkel nach hinten gerichtet ist und welches im vorderen, spitzen Bereich des "V" offen ist. Innerhalb dieses Kunststoffgehäuses ist in seinen Seitenwänden eine, eine Einfachrasierklinge tragende Klingenplattform zwischen einer Rasierstellung und einer Sicherheitsstellung verschwenkbar gelagert. Diese Klingenplattform weist vorderseitig in Bereich der Verschwenkachse eine Führungsleiste auf, die über Stege mit der Klingenplattform verbunden ist. Zwischen diesen Stegen sind Durchbrechungen definiert, welche in der unteren Öffnung des Kunststoffgehäuses münden.

Der bekannte Rasierapparatekopf weist sowohl unterseitig als auch rückseitig Öffnungen auf, doch insbesondere die Öffnung an der Rückseite des Kunststoffgehäuses, welche im übrigen nur dem Verschwenken der Klingenplattform dient, ist nur sehr eingeschränkt für ein Durchströmen geeignet, da eine direkte lineare Verbindung zwischen der Rasierklinge und dieser Öffnung nicht vorhanden ist, so daß innerhalb des Rasierapparatekopfes Stauungen auftreten, bei denen sich Seifenrückstände innerhalb des Kunststoffgehäuses festsetzen. Dies verschlechtert nicht nur die Rasiereigenschaften, da der Rasierschaum während der Rasur nicht in dem erforderlichen Maße abgeführt werden kann, auch das Reinigungsverhalten ist beeinträchtigt, da sich zwischen der Klingenplattform und dem äußeren Kunststoffgehäuse Rasierschaum festsetzen kann.

Ein Rasierapparatekopf in Form einer Rasierklingeneinheit ist in der GB-A-2 055 069 offenbart, die am vorderen Ende eines Naßrasierapparates anordenbar ist. Die Rasierklingeneinheit weist dabei ein im wesentlichen wannenförmiges Kunststoffgehäuse auf, in dem im oberen Bereich zwei Rasierklingen hintereinander angeordnet sind. Die rückseitige Wand des wannenförmigen Kunststoffgehäuses ist dabei teilweise weggelassen. Unterseitig weist das Kunststoffgehäuse zwar ebenfalls eine Öffnung auf, doch ist diese verschlossen, nachdem die Rasierklinge auf einen Handgriff aufgesteckt worden ist.

Davon ausgehend liegt der Erfindung die **Aufgabe** zugrunde, den Rasierapparatekopf, insbesondere die Rasierklingeneinheit eines Naßrasierapparates derart weiterzuentwickeln, daß das Durchströmen durch die Durchbrechungen hindurch verbessert ist.

Als technische **Lösung** wird mit der Erfindung vorgeschlagen, daß eine Leiste mit einem im wesentlichen L-förmigen Querschnittsprofil vorgesehen ist, an deren einen Schenkel die Rasierklinge(n) parallel dazu befestigt ist (sind), wobei die Leiste durch kurze Leistenstücke gebildet ist, welche durch Stege im Bereich der anderen Schenkel der Leistenstücke einstückig miteinander verbunden sind und wobei die freigelassenen Öffnungen zwischen den Leistenstücken mit den rückseitigen Durchbrechungen des Kunststoffgehäuses fluchten.

Auf diese Weise ist ein Rasierapparatekopf, insbesondere eine Rasierklingeneinheit eines Naßrasierapparates geschaffen, der eine optimale Anordnung von Durchbrechungen zum Durchströmen aufweist. Mittels der erfindungsgemäßen L-förmigen Leiste ist dabei eine einfache Möglichkeit speziell zur Schaffung der rückseitigen Durchbrechungen geschaffen. Bei einer Doppelrasierklinge sind dabei die beiden Rasierklingen beidseitig des einen Schenkels der Leiste angeordnet, so daß die Zwischenräume zwischen den Leistenstücken Öffnungen definieren, die mit den rückseitigen Durchbrechungen des Kunststoffgehäuses in Verbindung stehen. Somit kann der Rasierschaum während der Rasur durch die beiden Rasierklingen hindurchströmen, was insgesamt die Rasiereigenschaften verbessert. Darüber hinaus wird das Reinigungsverhalten derart verbessert, daß sich keine Seifenrückstände innerhalb des Kunststoffgehäuses festsetzen können.

Vorteilhafte Weiterbildungen ergeben sich aus den Unteransprüchen.

Vorzugsweise sind die unterseitigen Durchbrechungen durch die durch Stege gebildeten Zwischenabstände gebildet, welche die Führungsleiste mit dem restlichen Kunststoffgehäuse verbinden. Auf diese Weise läßt sich ein optimaler Durchströmquerschnitt im Bereich der unterseitigen Durchbrechungen schaffen.

Vorzugsweise ist dabei die Führungsleiste ausgehend von deren Oberseite rückseitig nach hinten hin abgeschrägt. Diese Abschrägung definiert einen Durchströmkanal schräg nach hinten sowie nach unten.

Um einen Stau sowie nicht zugängliche Spalte zu vermeiden, in denen sich Seifenreste ansammeln können, weisen die Stege im Bereich hinter der Führungsleiste oberseitig vorzugsweise Aussparungen auf.

Vorzugsweise stehen die beiden Schenkel der L-förmigen Leiste senkrecht zueinander.

In einer Weiterbildung sind die Leistenstücke im Bereich der freien Ende der Schenkel durch die Stege miteinander verbunden.

Dies bedeutet, daß oberhalb dieser Stege zwischen einander benachbarten Leistenstücken Öffnungen definiert sind, die einen optimalen Durchströmungsquerschnitt ergeben.

Weiterhin wird in einer Weiterbildung vorgeschlagen, daß die Stege, welche die vordere Führungsleiste mit dem restlichen Kunststoffgehäuse verbinden, vor den Leistenstücken liegen. Dies bringt den Vorteil mit sich, daß der durch die Leistenstücke sowie durch die Stege gebildete Strömungswiderstand auf ein Minimum reduziert ist.

Schließlich wird in einer Weiterbildung des Rasierapparatekopfes zur Verbesserung der Rasiereigenschaften vorgeschlagen, daß dieser mit einem zu der (den)( Schneidkante(n) der Rasierklinge(n) parallelen, reibungsmindernden Gleitstreifen insbesondere auf der Basis wasserlöslicher oder nicht wasserlöslicher Polymere versehen ist.

Ein Ausführungsbeispiel eines erfindungsgemäßen Rasierapparatekopfes in Form einer Rasierklingeneinheit wird nachfolgend anhand der Zeichnungen beschrieben. In diesen zeigt:
- Fig. 1: eine Draufsicht auf die Rasierklingeneinheit;
- Fig. 2: eine Unteransicht der Rasierklingeneinheit;
- Fig. 3: eine Vorderansicht der Rasierklingeneinheit;
- Fig. 4: eine Rückansicht der Rasierklingeneinheit;
- Fig. 5: eine Seitenansicht der Rasierklingeneinheit;
- Fig. 6: einen Schnitt entlang der Linie VI-VI in Fig. 1;
- Fig. 7: eine Draufsicht auf das Unterteil des Kunststoffgehäuses der Rasierklingeneinheit;
- Fig. 8: eine Vorderansicht des Oberteils des Kunststoffgehäuses der Rasierklingeneinheit in Form einer Fixierleiste;
- Fig. 9: eine Vorderansicht des Klingenblockes.

Eine Rasierklingeneinheit 1 besteht aus einem Kunststoffgehäuse 2. Dieses ist zusammengesetzt aus einem Unterteil 3 sowie aus einer oberen Fixierleiste 4, die miteinander unlösbar verbunden sind und zwischen sich einen Rasierklingen 5,5' tragenden Klingenblock 6 unverrückbar festlegen. Die Fixierleiste 4 kann dabei mit dem Unterteil 3 verklebt, verschweißt, insbesondere ultraschallverschweißt oder durch Zapfen/Bohrungen über Reibschluß miteinander verbunden sein.

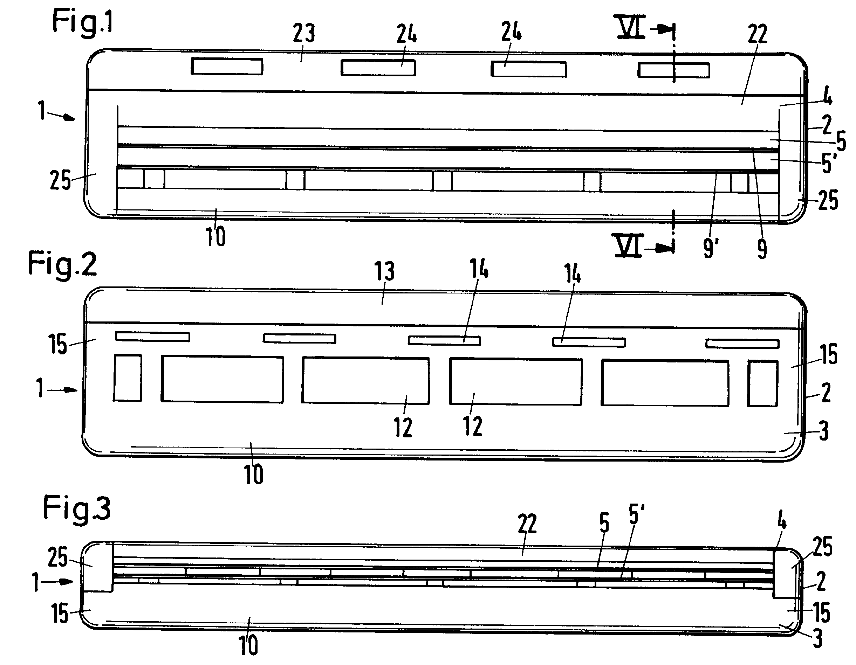

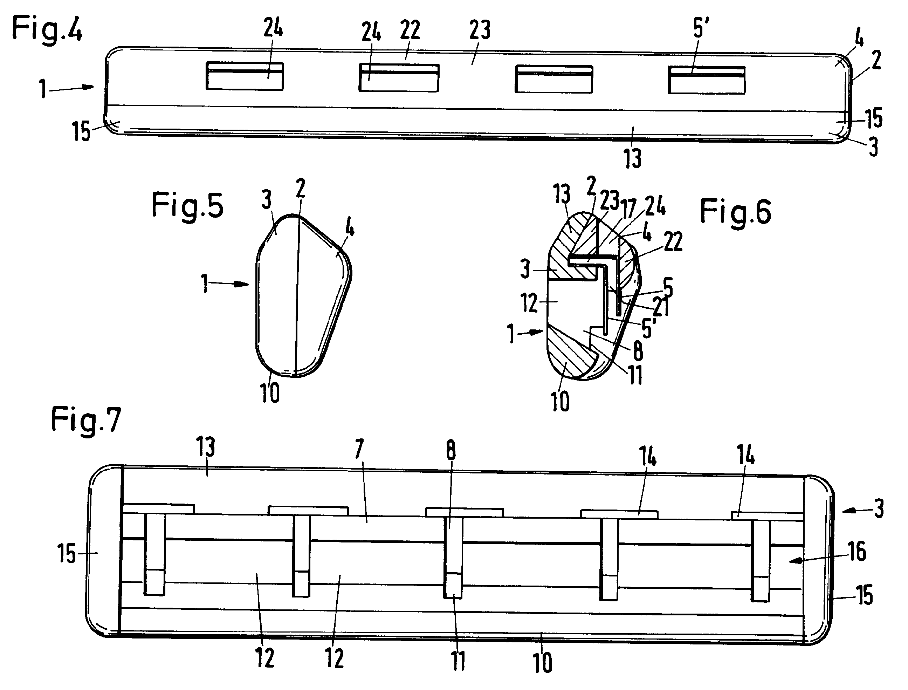

Das Unterteil 3 des Kunststoffgehäuses 2 weist zunächst einen zentralen sowie in Längsrichtung sich erstreckenden Mittelsteg 7 auf. An diesem sind mit Abstand über die Länge verteilt Auflagestege 8 angeformt, welche sich senkrecht zur Längserstreckung der Schneidkanten 9,9' der beiden Rasierklingen 5,5' erstrecken. Am vorderen, freien Ende tragen diese Auflagestege 8 eine Führungsleiste 10, welche mit ihrer Vorderfläche abgerundet ist. Dabei weisen die Auflagestege 8 im Bereich hinter der Führungsleiste 10 jeweils Aussparungen 11 auf. In den Bereichen zwischen einander benachbarten Auflagestegen 8 sowie zwischen dem Mittelsteg 7 und der Führungsleiste 10 sind jeweils Durchbrechungen 12 definiert, wie insbesondere in der Draufsicht gemäß Fig. 7 zu erkennen ist. Auch die Unteransicht in Fig. 2 der gesamten Rasierklingeneinheit 1 läßt dies erkennen.

Parallel zum Mittelsteg 7 weist dieser auf der zur Führungsleiste 10 gegenüberliegenden Seite eine dazu parallele Rückwand 13 auf. Diese ist zum Mittelsteg 7 hin nach unten abgeschrägt. Im Bereich zwischen dem Mittelsteg 7 und der Rückwand 13 sind dabei Aussparungen in Form von Längsschlitzen 14 ausgebildet, die der Aufnahme des Klingenblocks 6 dienen, wie nachfolgend noch beschrieben werden wird. Schließlich weist das Unterteil 3 des Kunststoffgehäuses 2 noch Seitenwände 15 auf.

Die Auflagestege 8 des Unterteils 3 des Kunststoffgehäuses 2 bilden eine Klingenplattform 16 zur Auflage des Klingenblocks 6. Dieser besteht aus einer Leiste 17, welche ein im wesentlichen L-förmiges Querschnittsprofil aufweist. Die Leiste 17 besteht aus einzelnen, kurzen Leistenstücken 17'. Diese sind durch Stege 18 miteinander verbunden, und zwar im Bereich des einen Schenkels 19 der Leiste 17 bzw. der Schenkel 19' der Leistenstücke 17'. Die Stege 18 sind dabei einstückig mit den Leistenstücken 17' ausgebildet und sitzen im wesentlichen im mittleren Bereich der Schenkel 19' der Leistenstücke 17', so daß oberhalb der Stege 18 jeweils eine Öffnung 20 freigelassen ist, während die Schenkel 19' ein freies Ende aufweisen.

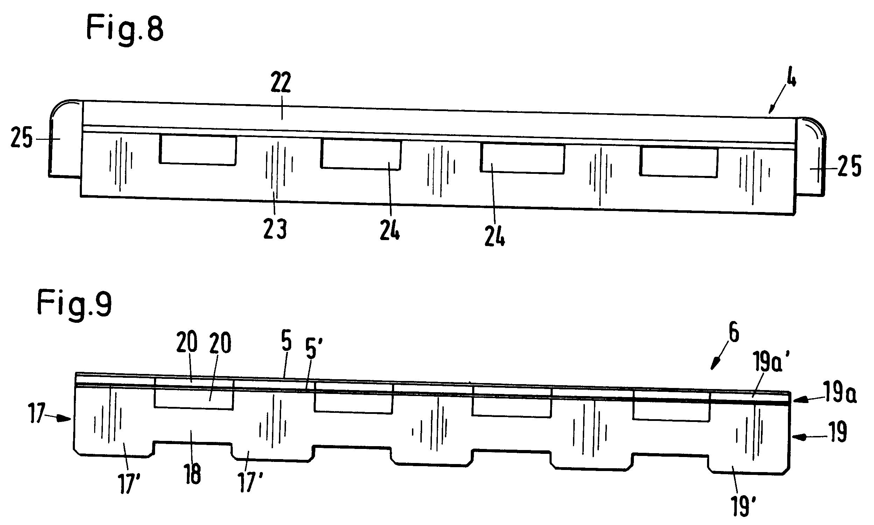

Der andere Schenkel 19a der Leiste 17 bzw. die Schenkel 19a' der Leistenstücke 17' dienen der Aufnahme und Befestigung der beiden Rasierklingen 5,5'. Die obere Rasierklinge 5 ist dabei auf der einen Seite des Schenkels 19a und die untere Rasierklinge 5' an der gegenüberliegenden Seite des Schenkels 19a befestigt, so daß dieser die Funktion eines Abstandhalters 21 erfüllt. Die beiden Rasierklingen 5, 5' sind dabei parallel zueinander ausgerichtet, während die Schneidkanten 9,9' versetzt zueinander sind. Wie in der Vorderansicht gemäß Fig. 9 des Klingenblocks 6 sowie in der Vorderansicht gemäß Fig. 3 der kompletten Rasierklingeneinheit 1 erkennbar ist, sind zwischen den Schenkeln 19a' Öffnungen 20 freigelassen.

Zur Montage der Rasierklingeneinheit wird der so ausgebildete Klingenblock 6 von oben auf das Unterteil 3 derart gesetzt, daß die Unterseite der unteren Rasierklinge 5' auf der durch die Auflagestege 8 definierten Klingenplattform 16 zu liegen kommt. Weiterhin kommen die freien Enden der Schenkel 19' der Leistenstücke 17 in den dazu korrespondierenden Längsschlitzen 14 im Unterteil 3 zur Aufnahme. Der Klingenblock 6 ist somit fest auf bzw. im Unterteil 3 des Kunststoffgehäuses 2 festgelegt.

Zur Fixierung des Klingenblocks 6 dient die Fixierleiste 4. Diese definiert eine auf der Oberseite der oberen Rasierklingen 5 aufliegende Abdeckkappe 22. An dieser ist eine rückseitige Wand 23 angeformt. Diese weist Durchbrechungen 24 auf, die mit den in der Leiste 17 ausgebildeten Öffnungen 20 fluchten. Seitlich weist die Fixierleiste 4 dann noch angeformte Flügel 25 auf.

Zur Bildung der vollständigen Rasierklingeneinheit 1 wird die Fixierleiste 4 auf das Unterteil 3 von oben aufgesteckt. Dabei kommt die rückseitige Wand 23 der Fixierleiste 4 auf der Rückwand 13 des Unterteils 3 sowie die Unterseite der Flügel 25 der Fixierleiste 4 auf den Seitenwänden 15 des Unterteils 5 plan zu liegen. Die unlösbare Verbindung zwischen der Fixierleiste 4 und dem Unterteil 3 kann dann durch Verkleben, Verschweißen, insbesondere Ultraschallverschweißen oder durch Reibschluß erfolgen.

Die durch die Fixierleiste 4 definierte Abdeckkappe 22 kann zusätzlich noch mit einer reibungsmindernden Beschichtung beispielsweise aus Fotolack oder aus einem Polymer versehen sein.

Die abgewinkelte Leiste 17 für den Abstandhalter 21 mit den Öffnungen 20 für Durchströmkanäle erlaubt die Herstellung einer Klinge mit schmalen Schneiden. Die Öffnungen 20 zusammen mit den Durchbrechungen 24 in der Fixierleiste sowie die Durchbrechungen 12 im Unterteil 3 gewährleisten eine bessere Durchströmung sowie eine verbesserte sowie einfachere Reinigung. Die Form der Leiste 17 ist dabei derart gewählt, daß insgesamt kein größerer Materialverbrauch als bei ungewinkelten Abstandhaltern entsteht. Dies wird im wesentlichen dadurch erreicht, daß die Leiste 17 die Form ineinanderliegender Rechen hat. Der besondere Vorteil dieser Ausführung liegt darin, daß trotz der Öffnungen 20 zwischen den Rasierklingen 5,5' die Leiste 17 und somit der Abstandhalter 21 aufgrund der gewinkelten Form eine stabile Einheit mit den Rasierklingen 5,5' bildet. Zusätzlich ist bei der erfindungsgemäßen Rasierklingeneinheit die zusätzliche Klingenabdeckung in Form einer Abdeckkappe 22 von Vorteil, die durch die Fixierleiste 4 gebildet wird.

### Bezugszeichenliste

1 Rasierklingeneinheit
2 Kunststoffgehäuse
3 Unterteil
4 Fixierleiste
5 Rasierklinge
5' Rasierklinge
6 Klingenblock
7 Mittelsteg
8 Auflagesteg
9 Schneidkante
9' Schneidkante
10 Führungsleiste
11 Aussparung
12 Durchbrechung
13 Rückwand
14 Längsschlitz
15 Seitenwand
16 Klingenplattform
17 Leiste
17' Leistenstück
18 Steg
19 Schenkel
19a Schenkel
19' Schenkel
19a' Schenkel
20 Öffnung
21 Abstandhalter
22 Abdeckkappe
23 rückseitige Wand
24 Durchbrechung
25 Flügel

## Patentansprüche

1. Am vorderen Ende eines Handgriffs angeordneter Rasierapparatekopf, insbesondere Rasierklingeneinheit (1) eines Naßrasierapparates,
bei dem in einem, an einer Vorderkante eine Führungsleiste (10) aufweisenden Kunststoffgehäuse (2) eine Einfach- oder Doppelrasierklinge (5,5') angeordnet ist, wobei das Kunststoffgehäuse (2) von der Vorderkante gesehen sowohl unterseitig als auch rückseitig Durchbrechungen (12,24) aufweist, welche jeweils mit dem offenen Bereich des Kunststoffgehäuses (2) bei der (den) Schneidkante(n) (9,9') der Rasierklinge(n) (5,5') in Verbindung stehen,
**dadurch gekennzeichnet**,
daß eine Leiste (17) mit einem im wesentlichen L-förmigen Querschnittsprofil vorgesehen ist, an deren einen Schenkel (19a) die Rasierklinge(n) (5,5') parallel dazu befestigt ist (sind), wobei die Leiste (17) durch kurze Leistenstücke (17') gebildet ist, welche durch Stege (18) im Bereich der anderen Schenkel (19') der Leistenstücke (17') einstückig miteinander verbunden sind und wobei die freigelassenen Öffnungen (20) zwischen den Leistenstücken (17') mit den rückseitigen Durchbrechungen (24) des Kunststoffgehäuses (2) fluchten.

2. Rasierapparatekopf nach Anspruch 1, dadurch gekennzeichnet, daß die beiden Schenkel (19,19a) der L-förmigen Leiste (17) senkrecht zueinander stehen.

3. Rasierapparatekopf nach Anspruch 1 oder 2, dadurch gekennzeichnet, daß die Leistenstücke (17') im Bereich der freien Enden der Schenkel (19') durch die Stege (18) miteinander verbunden sind.

4. Rasierapparatekopf nach einem der Ansprüche 1 bis 3, dadurch gekennzeichnet, daß die unterseitigen Durchbrechungen (12) durch die durch Stege (8) gebildeten Zwischenabstände gebildet sind, welche die Führungsleiste (10) mit den restlichen Kunststoffgehäuse (2) verbinden, wobei die Stege (8) vor den Leistenstücken (17') liegen.

5. Rasierapparatekopf nach einem der Ansprüche 1 bis 4, dadurch gekennzeichnet, daß die Führungsleiste (10) ausgehend von deren Oberseite rückseitig nach hinten hin abgeschrägt ist.

6. Rasierapparatekopf nach einem der Ansprüche 1 bis 5, dadurch gekennzeichnet, daß die Stege (8) im Bereich hinter der Führungsleiste (10) oberseitig Aussparungen (11) aufweisen.

7. Rasierapparetekopf nach einem der Ansprüche 1 bis 6, dadurch gekennzeichnet, daß dieser mit einem zu der (den) Schneidkante(n) (9,9') der Rasierklinge(n) (5,5') parallelen, reibungsmindernden Gleitstreifen insbesondere auf der Basis wasserlöslicher oder nicht wasserlöslicher Polymere versehen ist.

## Claims

1. A razor head arranged at the front end of a razor handle, in particular a razor blade unit 1 of a wet razor,
in which a single or twin razor blade 5, 5' is arranged in a plastic housing including a front guardbar, whereby the plastic housing 2 has perforations 12, 24 provided from the from edge to the under side as well as to the rear side, which are provided in connection with the open area of the plastic housing 2 by the cutting edges 9, 9' of the razor blades 5, 5',
characterised in that,
a strip 7 is provided with an essentially L-shaped cross section, on one leg 19a of which the blades 5, 5' are fixed parallel thereto, whereby the strip is formed from short strip pieces 17' which are connected together to form one piece in the region of the other leg 19' by means of webs 18 and whereby the left open openings 20 between the strip pieces 17 are aligned with perforations 24 in the rear wall of the plastic housing 2.

2. A razor head according claim 1, characterised in that the two legs 19, 19a of the L-shaped strip 17 are perpendicular to each other.

3. A razor head according to claim 1 or claim 2, characterised in that the strip pieces 17' are connected to each other in the region of the free end of the leg 19' by means of webs 18.

4. A razor head according to any one of the claims 1 to 3, characterised in that the under side perforations 12 are formed from the in between spaces formed by the webs 18, in which the guardbar is connected to the rest of the plastic housing 2, and whereby the webs 3 lie in front of the strip pieces.

5. A razor head according to any one of claims 1 to 4, characterised in that the guardbar 10 is bevelled backwards along its rear side starting from its top side.

6. A razor head according to any one of claims 1 to 5, characterised in that the webs 18 comprise grooves 11 on the upper side in the region behind the guardbar 10.

7. A razor head according to any one of claims 1 to 6, characterised in that the razor head is provided with a friction reducing glide strip in particular based on a water soluble or water insoluble polymer and which is parallel to the cutting edges 9 of the razor blades 5.

## Revendications

1. Tête de rasage disposée à l'extrémité avant d'une poignée, notamment ensemble à lames (1) pour rasoir mécanique, dans laquelle une lame de rasage simple ou double (5,5') est disposée dans un boîtier en matière plastique (2) comportant une moulure de guidage (10) sur son bord avant, le boîtier en matière plastique (2) présentant, vu depuis son bord avant, des passages inférieurs et arrières (12,24) dont chacun est en communication avec la zone ouverte du boîtier en matière plastique (2) située à proximité de l'arète de coupe ou des arètes de coupe (9,9') de la ou des lames de rasage (5,5'),
caractérisée en ce qu'il est prévu une barrette (17) à section transversale essentiellement en forme de L, la ou les lames de rasage (5,5') étant fixée (s) parallèlement sur l'une des branches (19a) de cette barrette, la barrette (17) étant constituée de courts tronçons de barrettes (17') assemblés entre eux en une seule pièce par des entretoises (18) dans la zone de l'autre branche (19') des tronçons de barrette (17'), les ouvertures (20) dégagées entre les tronçons de barrette (17') étant en face des passages arrière (24) du boîtier en matière plastique (2).

2. Tête de rasage selon la revendication 1, caractérisée en ce que les deux branches (19,19a) de la barrette en forme de L (17) sont perpendiculaires l'une à l'autre.

3. Tête de rasage selon la revendication 1 ou la revendication 2, caractérisée en ce que les tronçons de barrette (17') sont assemblés entre eux par les entretoises (18) dans la zone des extrémités libres des branches (19').

4. Tête de rasage selon l'une des revendications 1 à 3, caractérisée en ce que les passages inférieurs (12) sont constitués par des intervalles formés entre des nervures (8) reliant la moulure de guidage (10) à la partie restante du boîtier en matière plastique (2), les nervures (8) étant disposées devant les tronçons de barrette (17').

5. Tête de rasage selon l'une des revendications 1 à 4, caractérisée en ce que la moulure de guidage (10) est constituée en biseau descendant vers l'arrière en partant de sa partie supérieure.

6. Tête de rasage selon l'une des revendications 1 à 5, caractérisée en ce que les nervures (8) présentent des échancrures supérieures (11) dans la zone située derrière la moulure de guidage (10).

7. Tête de rasage selon l'une des revendications 1 à 6, caractérisée en ce qu'elle est munie d'une bande de glissement réduisant le frottement parallèle à l'arète de coupe ou aux arètes de coupe (9,9') de la ou des lames de rasage (5,5'), cette bande étant notamment à base de polymères solubles dans l'eau ou insolubles dans l'eau.
